# EUROPÄISCHE PATENTSCHRIFT

(11) **EP 2 011 688 B1**
(45) Veröffentlichungstag und Bekanntmachung des Hinweises auf die Patenterteilung: **19.05.2010**
(21) Anmeldenummer: 08011495.2
(22) Anmeldetag: 25.06.2008
(51) Int. Cl.: B60P 7/15, B60R 7/08

(54) **Adapter für ein Kraftfahrzeug-Haltesystem**
Adapter for a motor vehicle holding system
Adaptateur pour un système d'arrêt de véhicule automobile

(30) Priorität: 03.07.2007 DE 102007030913
(43) Veröffentlichungstag der Anmeldung: 07.01.2009
(73) Patentinhaber: YMOS GmbH, 55743 Idar-Oberstein (DE)
(72) Erfinder: Kley, Frank, 55767 Gimbweiler (DE)
(74) Vertreter: Ostermann, Thomas

(56) Entgegenhaltungen:
- EP-A- 1 396 384
- DE-A1- 10 134 887
- DE-U1- 20 302 929
- US-A1- 2006 263 163
- US-B1- 6 382 891

## Beschreibung

Die Erfindung betrifft einen Adapter für ein Kraftfahrzeug-Haltesystem nach dem Oberbegriff des Patentanspruchs 1.

Aus der DE 20 2006 010 599 U1 ist ein Adapter für ein Kraftfahrzeug-Haltesystem im Bereich eines Kofferraums des Kraftfahrzeuges bekannt, das ein Gehäuse und Klemmelemente aufweist, so dass das Gehäuse in einer Klemmstellung an einer am Kraftfahrzeug montierten Halteschiene festlegbar ist. Das Adapter weist einen O-förmigen Verzurrbügel auf, so dass unter Verwendung von Bändern Ladegüter verzurrt werden können.

Aus der DE 203 02 929 U1 ist ein Adapter zur Festlegung von Fördergut an einer in einem Kraftfahrzeug montierten Halteschiene bekannt. Zur Befestigung des Adapters an der Schiene dient ein Rastbolzen, der in eine Rastausnehmung der Befestigungsschiene eingreift und den Adapter somit festlegt. Der Adapter weist darüber hinaus eine Ausnehmung auf, die zur Aufnahme eines Vertikalstabs des Förderguts dient. Zum Einsetzen des Vertikalstabs in die Ausnehmung ist eine Einsetzöffnung ausgebildet, wobei die Einsetzöffnung mittels eines Klemmhebels zumindest teilweise verschlossen werden kann. Beim Verschließen der Einsetzöffnung ist der Vertikalstab des Förderguts in der Ausnehmung festgelegt.

Aufgabe der vorliegenden Erfindung ist es, ein Adapter für ein Kraftfahrzeug-Haltesystem derart weiterzubilden, dass die Handhabung bzw. Bedienungsfreundlichkeit hinsichtlich der Befestigung von Gepäckstangen, Netzen, Taschen und dergleichen verbessert.

Zur Lösung dieser Aufgabe weist die Erfindung die Merkmale des Patentanspruchs 1 auf.

Der besondere Vorteil der Erfindung besteht darin, dass die Bereitstellung von Befestigungsmöglichkeiten an dem Adapter durch Vorsehen eines verschwenkbaren Funktionshakens verbessert wird. In einer Klemmstellung des Adapters kann der Funktionshaken aus einer Erstreckungsebene eines Gehäuses des Adapters herausgeschwenkt werden, so dass der Anbringungsort von Befestigungsmitteln, wie Gurt, Stangen etc. an dem Adapter in der Klemmstellung desselben veränderbar ist. Hierdurch vergrößert sich die Variabilität des Adapters hinsichtlich der Anbringung bzw. Festlegung von Befestigungsmitteln an demselben. Vorteilhaft weist die Erfindung eine räumliche Trennung zwischen einem manuell zu betätigendem Drehelement, mittels dessen der Adapter in die Klemmstellung und in die Nichtklemmstellung verbringbar ist, und dem Funktionshaken auf, so dass bedienungsfreundlich eine definierte räumliche Trennung zwischen den Betätigungsmitteln für die Festlegung des Adapters an der Halteschiene des Kraftfahrzeugs einerseits und für das Festlegen von Befestigungsmitteln an dem Adapter andererseits gegeben ist. Weiterhin kann der Adapter mittels der in die Vertiefung des Drehelements einsetzbaren Haltestange handhabungsfreundlich betätigt werden.

Nach einer Weiterbildung der Erfindung weist der Adapter einen Schlitz für eine Gurtaufnahme auf, die sich in Verlängerung zu einer Schwenkachse erstreckt, um die der Funktionshaken schwenkbar ist. Der Schlitz bildet somit eine räumliche Trennung zwischen dem zentralen Abschnitt des Gehäuses, in dem sich das Drehelement befindet, und einem äußeren Abschnitt des Gehäuses, in dem sich der Funktionshaken befindet. Vorteilhaft kann somit der Schlitz Platz sparend angeordnet sein.

Nach einer Weiterbildung der Erfindung ist die Haltestange über ein Kugelgelenk mit dem Drehknopf verbunden, so dass die Haltestange bedienungsfreundlich durch Verschwenken um den Schwenkpunkt des Kugelgelenkes in einem dreidimensionalen Raum ausrichtbar ist.

Nach einer Weiterbildung der Erfindung ist das Gehäuse in einem zu dem Drehelement benachbarten unteren Bereich einstückig mit einem Haken verbunden, an dem die Haltestange lösbar verbindbar ist. Vorteilhaft wird neben der Aufnahme des Drehknopfs ein weiteres Funktionsbauteil bereitgestellt zur Verbindung mit als eine Haltestange ausgebildeten Befestigungsmitteln.

Die Erfindung ermöglicht somit die Bereitstellung von Funktionsbauteilen zur Festlegung von Befestigungsmitteln über die gesamte Fläche eines Gehäuses des Adapters. In einem zentralen Abschnitt des Gehäuses kann in unterschiedlicher Höhe eine Haltestange angebracht werden. In einem äußeren Abschnitt des Gehäuses können in unterschiedlichen Höhen Gurte aufgenommen, Netze bzw. Taschen eingehängt werden. Hierdurch wird ein Adapter geschaffen, das universell zum Festlegen von Befestigungsmitteln bzw. Einhängemitteln geeignet ist.

Nach einer Weiterbildung der Erfindung ist der Funktionshaken in der eingeklappten Stellung, in der er entlang der Erstreckungsebene des Gehäuses verläuft, und in der ausgeklappten Stellung, in der er sich in einem Winkel zu der Erstreckungsebene des Gehäuses befindet, rastend festgelegt. Vorteilhaft können hierdurch eine oder mehrere definierte Festlegpositionen vorgegeben werden.

Nach einer Weiterbildung der Erfindung weist der Funktionshaken randseitig mindestens ein Abstützende und/oder einen Drehanschlag auf, so dass der Funktionshaken in der eingeklappten Stellung und in der ausgeklappten Stellung jeweils in einer definierten Position zu dem Gehäuse erhalten ist.

Nach einer Weiterbildung der Erfindung ist das Drehelement um eine senkrecht zur Erstreckungsebene des Gehäuses verlaufende Drehachse bewegbar, wobei das Drehelement zum Verbringen des Gehäuses in die Klemmstellung auf Stellmittel derart einwirkt, dass in einer Drehstellung des Drehelementes ein erstes Klemmelement in Querrichtung zu der Drehachse des Drehelementes gegen die Halteschiene drückt und ein zweites Klemmelement in Axialrichtung des Drehelementes gegen die Halteschiene drückt. Vorteilhaft kann hierdurch der Adapter entlang der Halteschiene ohne Aufwenden einer der Haltekraft eines Klemmelementes entgegenwirkenden Kraft erfolgen. In der Verschiebestellung des Adapters befindet sich das Klemmelement lediglich in einer Anlageposition an der Halteschiene, ohne das eine Klemmkraft auf die Halteschiene wirkt. Bedienungsfreundlich kann das Verbringen des Adapters von einer Verschiebestellung in eine Klemmstellung und umgekehrt durch Verdrehen des Drehelementes um eine Drehachse bewirkt werden, wobei die Drehachse senkrecht zur Halteschiene verläuft. Dadurch, dass Klemmelemente in Querrichtung zur Drehachse des Drehelementes sowie in Axialrichtung des Drehelementes wirken, kann eine sichere Fixierung des Adapters in der Klemmstellung bewirkt werden.

Ein Ausführungsbeispiel der Erfindung wird nachfolgend anhand der Zeichnungen näher erläutert.

Es zeigen:

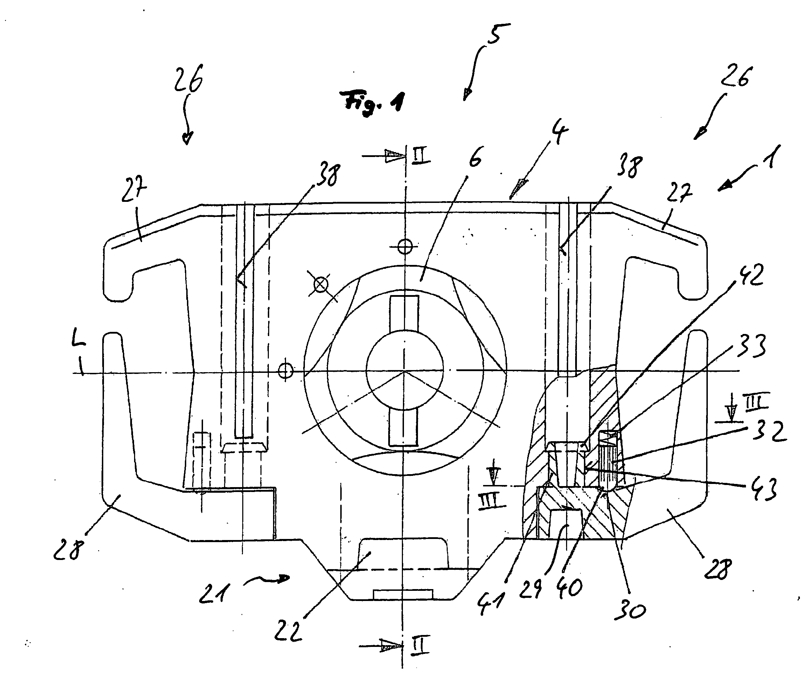

- Figur 1: eine Vorderansicht eines Adapters,

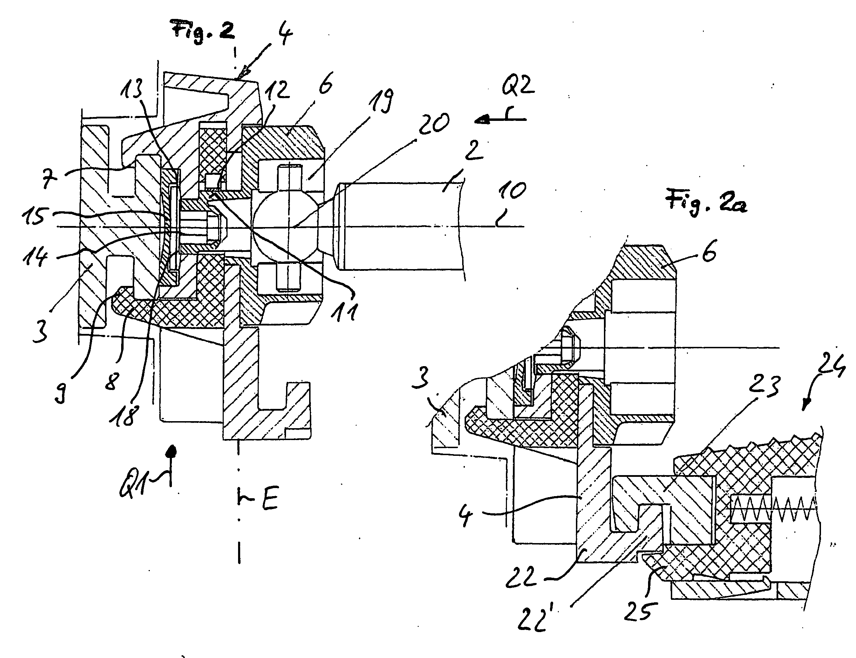

- Figur 2: einen Vertikalschnitt durch den an einer Halteschiene eines Kraftfahrzeugs montierten Adapter entlang der Linie II-II in Figur 1, das im Bereich eines zentralen Drehknopfes mit einer Haltestange verbunden ist,
- Figur 2a: einen teilweisen Vertikalschnitt durch den Adapter entlang der Linie II-II in Figur 1, der in einem unteren Bereich über einen Haken mit einer Haltestange verbunden ist,
- Figur 3: einen Schnitt durch den Adapter gemäß Figur 1 entlang der Schnittlinie III-III in einer eingeklappten Stellung eines Befestigungshakens (Taschenhaken) und
- Figur 3a: einen horizontalen Schnitt durch den Adapter gemäß Figur 1 entlang der Schnittlinie III-III in einer ausgeklappten Stellung des Befestigungshakens (Taschenhaken).

Ein erfindungsgemäßer Adapter 1 dient zur Befestigung von Haltestangen 2, Gepäckstangen, Netzen, Taschen und dergleichen an einer Halteschiene 3, die in einem Gepäckraum eines Kraftfahrzeugs an einer aufrechten Innenwand montiert ist.

Der Adapter 1 weist ein im Wesentlichen plattenförmiges Gehäuse 4 auf, das in einem zentralen Abschnitt 5 mittels eines Drehelementes 6 lösbar und verschiebbar an der Doppel-T-Halteschiene 3 gehaltert ist. Das Gehäuse 4 weist einen zangenförmigen Vorsprung 7 auf, der um einen von der Karosseriewand des Kraftfahrzeugs abstehenden vorderen Abschnitt der Halteschiene 3 herumgelegt ist. Auf einer gegenüberliegenden Seite der Halteschiene 3 hintergreift ein als Rasthaken 8 ausgebildetes Klemmelement mit seiner Nase 9 die Schmalseite des vorderen Abschnitts der Halteschiene 3.

Das Drehelement 6 ist als ein als Betätigungselement ausgebildeter Drehknopf ausgebildet, der um eine Drehachse 10 in dem Gehäuse 4 gelagert ist. Der Drehknopf 6 ist drehfest mit einem Exzenter 11 verbunden, der eine in Umfangsrichtung verlaufende Exzenterfläche aufweist. Bei Verdrehung des Drehknopfes 6 aus einer Verschiebestellung in eine Klemmstellung um beispielsweise 45° übt die Exzenterfläche eine Kraft auf eine Blattfeder 12 auf, so dass der Rasthaken 8 in einer ersten Querrichtung Q1 seitlich zu der Halteschiene 3 in die Klemmposition bewegt wird und somit das Gehäuse 4 an der Halteschiene 3 einspannt.

Der Exzenter 11 weist einen axial verlaufenden Nocken 13 auf, der beim Verdrehen des Drehknopfes 6 in einer zweiten Querrichtung Q2 auf ein als axial verschiebliches Druckstück 14 wirkt, das auf eine in axialer Richtung federnd ausgelegte Druckplatte 15 (weiteres Klemmelement) wirkt. Die Druckplatte 15 wird somit in der Klemmstellung auf eine Oberseite bzw. Flachseite der Halteschiene 3 gedrückt. Da die Druckplatte 15 im Bereich des Druckstücks 14 federnd ausgelegt ist, kann dieser Vorgang immer wiederholt werden, ohne dass die Klemmkraft auf der Halteschiene 3 nachlässt.

Zur Montage des Adapters 1 an der Halteschiene 3 befindet sich der Drehknopf 6 in einer Nullstellung, in der der lichte Abstand zwischen dem Vorsprung 7 des Gehäuses 4 und der Nase 9 des Rasthakens 8 größer ist als die Quererstreckung des vorderen Bereiches der Halteschiene 3. Auf diese Weise kann der Adapter 1 auf die Halteschiene 3 aufgesetzt werden und mittels Verdrehung des Drehknopfes 6 um 45° in eine Verschiebestellung verbracht werden, in der die Nase 9 des Rasthakens 8 den vorderen Bereich der Halteschiene 3 hintergreift und der Adapter 1 entlang der Halteschiene 3 verschiebbar ist.

Der Drehknopf 6 hat die Verschiebestellung erreicht, wenn mittels einer am Kopf des Drehknopfes 6 in einer Ausnehmung gelagerte Rasthülse 16 mittels einer nicht dargestellten Druckfeder in einer Ausnehmung des Gehäuses 4 einrastet und somit den Drehknopf 6 arretiert.

Durch weiteres Verdrehen des Drehknopfes 6 um 45° in die Klemmstellung werden zum einen der Rasthaken 8 und zum anderen die axial bewegliche Druckplatte 15 in die Klemmposition verbracht.

In der Klemmstellung wird der Drehknopf 6 durch einen Raststift gehalten, so dass ein unbeabsichtigtes Lösen des Drehknopfes 6 und somit Lockern des Gehäuses 4 verhindert wird.

Der Exzenter 11 dient als Drehbewegungsumwandlungsorgan, wobei die umlaufenden Exzenterflächen als Querbewegungsanschluss zur Beaufschlagung des Rasthakens 8 und der Nocken 13 als Axialbewegungsanschluss zur Beaufschlagung des Druckstückes 14 dienen.

In der Verschiebestellung liegt die Nase 9 des Rasthakens 8 lediglich an der Halteschiene 3 an, ohne eine Klemmkraft auszuüben. Die Druckplatte 15 liegt in dieser Verschiebestellung ebenfalls ohne Klemmwirkung an der Halteschiene 3 an, wobei eine Wellscheibe 18 zwischen der Druckplatte 15 und dem Druckstück 14 für einen Toleranzausgleich sorgt.

In dem zentralen Abschnitt 5 des Gehäuses 4 sind Funktionsteile zur lösbaren Verbindung mit der Haltestange 2 angeordnet. Zum einen dient das Drehelement 6 als Funktionsteil, da es eine Vertiefung 19 aufweist, in die ein mit einem Kopf 20 versehenes Ende der Haltestange 2 eingreifen kann, so dass die Haltestange 2 über ein Kugelgelenk mit dem Drehelement 6 verbunden ist. Die Haltestange 2 kann somit in der Montageposition in horizontaler und/oder vertikaler Richtung um einen Mittelpunkt des Kopfes 20 verschwenkt werden. Das Drehelement 6 weist somit eine Doppelfunktion auf. Zum einen dient es zur Arretierung des Adapters 1 an der Halteschiene 3 und zum anderen zur Aufnahme eines Endes der Haltestange 2. Dadurch, dass das Ende der Haltestange 2 drehfest in der Vertiefung 19 des Drehelementes 6 gehalten ist, kann mittels Verdrehung der Haltestange 2 das Drehelement 6 in die den Adapter 1 an der Halteschiene 3 arretierende Klemmstellung und/oder in die den Adapter 1 entlang der Halteschiene 3 verschiebbare Verschiebestellung verbracht werden.

In einem unteren Bereich 21 des zentralen Abschnitts 5 ist als Funktionsteil ein Haken 22 angeordnet, der mit einem hakenförmigen Ende 23 einer Haltestange 24 formschlüssig, insbesondere rastend verbindbar ist. Zur Montage der Haltestange 24 an dem Gehäuse 4 wird dieselbe unter teilweisem Umgreifen eines Endes 22' des Hakens 22 durch das hakenförmige Ende 23 eingehängt und durch Hintergreifen eines federvorgespannten Klemmteils 25 der Haltestange 24 an dem Haken 22 arretiert.

Der Haken 22 ragt auf einer der Halteschiene 3 abgewandten Seite von dem Gehäuse 4 ab und erstreckt sich im Wesentlichen unterhalb des Drehelementes 6.

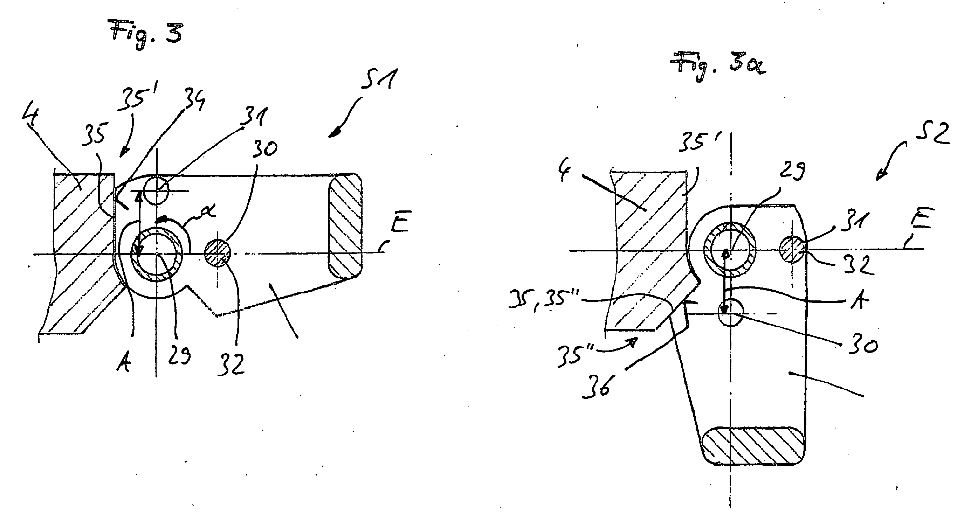

An gegenüberliegenden Seiten des zentralen Abschnitts 5 des Gehäuses 4 schließt sich jeweils ein äußerer Abschnitt 26 des Gehäuses 4 an, der jeweils über Funktionsteile zum Befestigen von Gurten, Bändern etc. aufweist. In einem oberen Bereich des äußeren Abschnitts 26 ist als Funktionsteil jeweils ein Befestigungshaken 27 angeordnet, der sich starr in einer Erstreckungsebene E des Gehäuses 4 erstreckt. In einem unteren Bereich des äußeren Abschnitts 26 ist jeweils ein schwenkbarer Funktionshaken 28 angeordnet, der um eine Schwenkachse 29 aus einer eingeklappten Stellung S1 gemäß Figur 3, in der er sich in der Erstreckungsebene E des Gehäuses 4 befindet, in eine ausgeklappte Stellung S2 gemäß Figur 3a verschwenkbar ist, in der sich der Funktionshaken 28 in einem Winkel zu der Erstreckungsebene E des Gehäuses 4 befindet. Der Funktionshaken 28 ist in der eingeklappten Stellung S1 und in der ausgeklappten Stellung S2 rastend festgelegt. Zu diesem Zweck weist der Funktionshaken 28 zwei um den Schwenkwinkel α versetzt und in einem gleichen Abstand A zur Schwenkachse 29 angeordnete erste Aussparung 30 und zweite Aussparung 31 auf, in die jeweils in der eingeklappten Stellung S1 bzw. in der ausgeklappten Stellung S2 ein federvorgespannter und rastend in einer Bohrung 33 des Gehäuses 4 gelagerter Bolzens 32 eingreift. Die Achse des Bolzens 32 ist parallel zu der Schwenkachse 29 angeordnet. Da die erste Aussparung 30 und die zweite Aussparung 31 in einem rechten Winkel versetzt zu der Schwenkachse 29 angeordnet sind, beträgt der Schwenkwinkel α im vorliegenden Ausführungsbeispiel 90°. Alternativ kann der Schwenkwinkel auch größer oder kleiner sein oder durch Erhöhung der Anzahl der Aussparungen mehrere Schwenkwinkel vorgegeben werden.

Wie aus Figur 3 ersichtlich ist, stützt sich der Funktionshaken 28 in der eingeklappten Stellung S1 mittels eines Abstützendes 34 flächig an einem hinteren Teil 35' einer Wand 35 des Gehäuses 4 ab. Wie aus Figur 3a ersichtlich ist, liegt der Funktionshaken 28 in der ausgeklappten Stellung S2 über einen Drehanschlag 36 an einem vorderen Teil 35" der Wand 35 an. Vorteilhaft können somit definierte Endstellungen des Funktionshakens 28 bewirkt werden.

Die Schwenkachse 29 ist senkrecht zur Drehachse 10 angeordnet. Die Schwenkachse 29 ist senkrecht zu einer Längsmittelebene L des Gehäuses 4 angeordnet. In Verlängerung der Schwenkachse 29 ist in einem Bereich zwischen dem zentralen Abschnitt 5 und dem äußeren Abschnitt 26 ein Schlitz 38 vorgesehen zur Aufnahme eines Gurtes. Der Schlitz 38 dient somit als weiteres Funktionsteil zur Befestigung von Gepäckstücken etc. Der Schlitz 38 erstreckt sich über die Hälfte einer Höhe des Gehäuses 4 und ermöglicht das Einschieben eines nicht dargestellten Gurtes bedienungsfreundlich von einer Oberseite des Gehäuses 4 her.

Damit der Funktionshaken 28 in der eingeklappten Stellung S1 verharrt, rastet der federvorgespannte Bolzen 32 mit seiner Kuppel 40 in die erste Aussparung 30. Der Funktionshaken 28 ist mit seinem Schaft 41 und seinem Kragen 42 im Gehäuse 4 eingeklippst und drehbar in einer Bohrung 43 gelagert. Oberhalb dieser Bohrung 43 erstreckt sich der Schlitz 38 zur Aufnahme eines Gurtes.

Der Adapter 1 kann aus einem Kunststoff- oder aus einem Metallmaterial hergestellt sein.

## Patentansprüche

1. Adapter (1) für ein Kraftfahrzeug-Haltesystem im Bereich eines Kofferraums des Kraftfahrzeugs mit einem Gehäuse (4), das in eine Klemmstellung an einer am Kraftfahrzeug montierten Halteschiene (3) festlegbar ist, wobei an dem Gehäuse (4) ein Drehelement (6) drehbar gelagert ist, mittels dessen das Gehäuse (4) in die Klemmstellung bringbar ist, wobei das Drehelement (6) Mittel aufweist zur lösbaren Verbindung mit einer Haltestange (2), **dadurch gekennzeichnet, dass** das Mittel zur lösbaren Verbindung der Haltestange (2) als eine Vertiefung (19) des Drehelementes (6) ausgebildet ist, in die die Haltestange (2) derart einsetzbar ist, dass das Drehelement (6) mittels der Haltestange (2) in die den Adapter (1) an der Halteschiene (3) festlegenden Klemmstellung und/oder in eine Verschiebestellung bringbar ist, in der das Gehäuse (4) mit der Haltestange (2) entlang der Halteschiene (3) verschiebbar ist, und dass das Gehäuse (4) mit einem um eine Schwenkachse (29) verschwenkbaren Funktionshaken (28) verbunden ist.

2. Adapter nach Anspruch 1, **dadurch gekennzeichnet, dass** das Gehäuse (4) einen Schlitz (38) aufweist zur Aufnahme eines Gurtes, wobei sich der Schlitz (38) in Verlängerung zu der Schwenkachse (29) des Funktionshakens (28) erstreckt.

3. Adapter nach Anspruch 1 oder 2, **dadurch gekennzeichnet, dass** das Drehelement (6) einen Drehknopf umfasst, der die Vertiefung (19) aufweist.

4. Adapter nach einem der Ansprüche 1 bis 3, **dadurch gekennzeichnet, dass** die Vertiefung (19) des Drehelementes (6) derart ausgebildet ist, dass ein Ende der Haltestange (2) über ein Kugelgelenk mit dem Drehelement (6) drehfest verbunden ist.

5. Adapter nach einem der Ansprüche 1 bis 4, **dadurch gekennzeichnet, dass** das Gehäuse (4) in einem zentralen Abschnitt (5) in einem unteren Bereich (21) eine mit demselben einstückig verbundenen Haken (22) umfasst, der auf einer der Halteschiene (3) abgewandten Seite des Gehäuses (4) angeordnet ist und mit dem die Haltestange (2) lösbar verbindbar ist.

6. Adapter nach Anspruch 5, **dadurch gekennzeichnet, dass** der Haken (22) an dem Gehäuse (4) angespritzt ist und dass die Haltestange (2) an dem Haken (22) einhängbar und verrastbar ist.

7. Adapter nach einem der Ansprüche 1 bis 6, **dadurch gekennzeichnet, dass** der verschwenkbare Funktionshaken (28) schwenkbar um eine senkrecht zu einer Längsmittelebene (L) des Gehäuses (4) verlaufende Schwenkachse (29) zwischen einer eingeklappten Stellung (S1), in der sich der Befestigungshaken (8) in einer Erstreckungsebene (E) des Gehäuses (4) erstreckt, und einer ausgeklappten Stellung (S2), in der der Funktionshaken (28) in einem Winkel zu der Erstreckungsebene (E) des Gehäuses (4) gelagert ist.

8. Adapter nach einem der Ansprüche 1 bis 7, **dadurch gekennzeichnet, dass** der Funktionshaken (28) in der eingeklappten Stellung (S1) und in der ausgeklappten Stellung (S2) rastend festgelegt ist, wobei ein federvorgespannter Bolzen (32) des Gehäuses (4) jeweils in eine Aussparung (30, 31) des Funktionshakens (28) eingreift.

9. Adapter nach einem der Ansprüche 1 bis 8, **dadurch gekennzeichnet, dass** der federvorgespannte Bolzen (32) parallel zu der Schwenkachse (29) angeordnet ist.

10. Adapter nach einem der Ansprüche 1 bis 9, **dadurch gekennzeichnet, dass** die Aussparungen (30, 31) des Funktionshakens (8) und der federvorgespannte Bolzen (32) in einem gleichen Abstand (A) zu der Schwenkachse (29) angeordnet sind und dass eine erste Aussparung (30) und eine zweite Aussparung (31) des Funktionshakens (28) in einem rechten Winkel versetzt um die Schwenkachse (29) angeordnet sind.

11. Adapter nach einem der Ansprüche 1 bis 10, **dadurch gekennzeichnet, dass** der Funktionshaken (28) ein Abstützende (34) aufweist, das in der eingeklappten Stellung (S1) flächig an dem hinteren Teil (35') einer Wand (35) des Gehäuses (4) anliegt.

12. Adapter nach einem der Ansprüche 1 bis 11, **dadurch gekennzeichnet, dass** der Funktionshaken (28) einen Drehanschlag (36) aufweist, der in der aufgeklappten Stellung (S2) flächig an einem vorderen Teil (35") der Wand (35) des Gehäuses (4) anliegt.

13. Adapter nach einem der Ansprüche 1 bis 12, **dadurch gekennzeichnet, dass** das Drehelement (6) um eine senkrecht zur Erstreckungsebene (E) des Gehäuses (4) verlaufende Drehachse (10) bewegbar ist, dass das Drehelement (6) zum Verbringen des Gehäuses (4) in die Klemmstellung auf Stellmittel (8, 15) derart einwirkt, dass in einer Drehstellung des Drehelementes (6) ein erstes Klemmelement (8) in Querrichtung zu der Drehachse (10) des Drehelementes (6) gegen die Halteschiene (3) drückt und ein zweites Klemmelement (15) in Axialrichtung des Drehelementes (6) gegen die Halteschiene (3) drückt.

14. Adapter nach einem der Ansprüche 1 bis 13, **dadurch gekennzeichnet, dass** die Stellmittel (8, 15) ein Drehbewegungsumwandlungsorgan (11) umfassen, das drehfest mit dem Drehelement (6) verbunden ist und das zum einen einen Querbewegungsanschluss zur Beaufschlagung des ersten Klemmelementes (8) und zum anderen einen Axialbewegungsanschluss (17) zur Beaufschlagung des zweiten Klemmelementes (15) aufweist.

15. Adapter nach einem der Ansprüche 1 bis 14, **dadurch gekennzeichnet, dass** der Querbewegungsanschluss als eine in Umfangsrichtung verlaufende Exzenterfläche des Exzenters (11) ausgebildet ist.

## Claims

1. Adapter (1) for a motor vehicle holding system in a vehicle trunk with a casing (4) which when in a clamped position is fixed to a holding rail (3) mounted to the motor vehicle wherein a rotary element (6) that is rotatably arranged on the casing (4) for said latter to be brought into said clamped position and wherein the rotary element (6) is provided with means for detachable connection to a holding rod (2), **characterized in that** the means for detachable connection of the holding rod (2) is a cavity (19) of the rotary element to accommodate the holding rod (2) in such a way that the rotary element (6) can by means of said holding rod (2) be brought into a clamped position in which the adapter (1) is kept to the holding rail (3) and/or into a shifting position in which the casing (4) is by means of the holding rod (2) shiftable along the holding rail (3), and that the casing (4) is in connection with a function hook (28) which is pivotable around a swivel axis (29).

2. Adapter according to Claim 1, **characterized in that** the casing (4) provided with a slot (38) to accommodate a belt which slot (38) is disposed in extension of the swivel axis (29) of the function hook (28).

3. Adapter according to Claim 1 or 2, **characterized in that** the rotary element (6) has a turning knob in which the cavity (19) is provided.

4. Adapter according to any of the preceding Claim 1 to 3, **characterized in that** the cavity (19) of the rotary element (6) is designed such that one end of the holding rod (2) is in connection with said rotary element (6) via a ball joint for rotational movement therewith.

5. Adapter according to any of the preceding Claims 1 to 4, **characterized in that** in a central portion (5) of a lower section (21) the casing (4) comprises a hook (22) which is integral therewith, which is disposed on a side of the casing (4) that is facing away from the holding rail (3) and by means of which the holding rod (2) detachably connected.

6. Adapter according to Claim 5, **characterized in that** the hook (22) is injection molded to the casing (4) and that the holding rod (2) is adapted to engage with the hook (22) and to get locked therein.

7. Adapter according to any of the preceding Claims 1 to 6, **characterized in that** the swivel type function hook (28) is adapted to swing around a swivel axis (29) that extends perpendicular to a longitudinal centerplane (L) of the casing, namely between an infolded position (S1) in which a fixing hook member (8) extends in a plane (E) of the casing and an outfolded position (S2) in which the function hook (28) is disposed under an angle relative to said plane (E) of the casing (4).

8. Adapter according to any of the preceding Claims 1 to 7, **characterized in that** the function hook (28) is locked in both infolded position (S1) and outfolded position (S2) in which cases a spring biased bolt (32) of the casing (4) engages into a recess (30, 31) of the function hook (38).

9. Adapter according to any of the preceding Claims 1 to 8, **characterized in that** the spring biased bolt (32) is arranged parallel to the swivel axis (29).

10. Adapter according to any of the preceding Claims 1 to 9, **characterized in that** the recesses (30, 31) of the function hook (8) and the spring biased bolt (32) are arranged at equal spacings (A) from the swivel axis (29) and that a first recess (30) and a second recess (31) of the function hook (28) are offset under a right angle around the swivel axis (29).

11. Adapter according to any of the preceding Claims 1 to 10, **characterized in that** the function hook (28) has a supporting end that is in a full-face contact with the rearward portion (35') of a wall (35) of the casing (4) when in infolded position.

12. Adapter according to any of the preceding Claims 1 to 11, **characterized in that** the function hook (28) has a rotary stop member (36) which is in a full-face contact with a forward portion (35") of a wall (35) of the casing (4) when in outfolded position.

13. Adapter according to any of the preceding Claims 1 to 12, **characterized in that** the rotary element (6) is adapted to move around a swivel axis (10) which extends perpendicular to the plane (E) of the casing (4) and that to bring the casing (4) into its clamped position the rotary element (6) acts on positioning means (8, 15) in such a way that in a turned position of the rotary element (6) a first clamping member (8) is pressed against the holding rail (3) in a direction cross to the swivel axis (10) of the rotary element (6) and a second clamping member (15) is pressed against the holding rail (3) in axial direction of the rotary element (6).

14. Adapter according to any of the preceding Claims 1 to 13, **characterized by** the fact that the positioning means (8, 15) comprise a rotatary movement converting member (11) which is fixed to the rotary element (6) for rotation therewith and which on the one hand has a cross shift connection for operating the first clamping member (8) and on the other hand an axial shift connection (17) for operating a second clamping member (15).

15. Adapter according to any of the preceding Claims 1 to 14, **characterized in that** the cross shift connection is a peripherally extending eccentric face of an eccentric (11).

## Revendications

1. Adaptateur (1) pour un système de support dans un véhicule automobile, prévu dans la zone d'un coffre dudit véhicule automobile, avec un boîtier (4), qui peut être fixé, dans une position de blocage, sur un rail de maintien (3) monté sur le véhicule automobile, un l'élément rotatif (6), au moyen duquel le boîtier (4) peut être amené dans la position de blocage, étant monté à rotation sur ledit boîtier (4), l'élément rotatif (6) présentant des moyens pour la liaison amovible d'une barre de maintien (2), **caractérisé en ce que** le moyen de liaison amovible de la barre de maintien (2) est réalisé sous la forme d'une cavité (19) de l'élément rotatif (6), dans laquelle la barre de maintien (2) peut être introduite de sorte que l'élément rotatif (6) puisse être amené, au moyen de la barre de maintien (2), dans la position de blocage, dans laquelle l'adapteur (1) est fixé sur le rail de maintien (3), et / ou dans une position de déplacement, dans laquelle le boitier (4) peut être déplacé avec la barre de maintien (2) le long du rail de maintien (3), et **en ce que** le boîtier (4) est relié à un crochet fonctionnel (28), qui peut pivoter autour d'un axe de pivotement (29).

2. Adaptateur selon la revendication 1, **caractérisé en ce que** le boîtier (4) présente une fente (38) pour la réception d'une sangle, ladite fente (38) s'étendant dans le prolongement de l'axe de pivotement (29) du crochet fonctionnel (28).

3. Adaptateur selon revendication 1 ou 2, **caractérisé en ce que** l'élément rotatif (6) comprend un bouton rotatif, qui est pourvu de la cavité (19).

4. Adaptateur selon l'une des revendications 1 à 3, **caractérisé en ce que** la cavité (19) de l'élément rotatif (6) est configurée de sorte qu'une extrémité de la barre de maintien (2) soit reliée, solidaire en rotation, à l'élément rotatif (6), par l'intermédiaire d'une articulation à rotule.

5. Adaptateur selon l'une des revendications 1 à 4, **caractérisé en ce que** le boîtier (4) comprend, dans une section centrale (5), dans une région inférieure (21), un crochet (22), qui, étant relié d'une pièce à celui-ci, est disposé sur un côté du boîtier (4), opposé au rail de maintien (3), et qui peut être relié de manière amovible à la barre de maintien (2).

6. Adaptateur selon la revendication 5, **caractérisé en ce que** le crochet (22) est réalisé par injection sur le boîtier (4) et que la barre de maintien (2) peut être suspendue au crochet (22) et verrouillée.

7. Adaptateur selon l'une des revendications 1 à 6, **caractérisé en ce que** le crochet fonctionnel pivotant (28) peut pivoter autour d'un axe de pivotement (29), perpendiculaire au plan médian longitudinal (L) du boîtier (4), entre une position repliée (S1), dans laquelle le crochet de fixation (8) s'étend sur un plan de projection (E) du boîtier (4) et une position dépliée (S2), dans laquelle le crochet fonctionnel (28) est tourné sur un angle par rapport au plan de projection (E) du boîtier (4).

8. Adaptateur selon l'une des revendications 1 à 7, **caractérisé en ce que** le crochet fonctionnel (28) est fixé par enclenchement dans la position repliée (S1) et dans la position dépliée (S2), un boulon (32) du boîtier (4), sollicité par ressort, s'engageant chaque fois dans un évidement (30, 31) du crochet fonctionnel (28).

9. Adaptateur selon l'une des revendications 1 à 8, **caractérisé en ce que** le boulon sollicité par ressort (32) est disposé parallèlement à l'axe de pivotement (29).

10. Adaptateur selon l'une des revendications 1 à 9, **caractérisé en ce que** les évidements (30, 31) du crochet fonctionnel (8) et le boulon sollicité par ressort (32) sont disposés à la même distance (A) de l'axe de pivotement (29) et qu'un premier évidement (30) et un deuxième évidement (31) du crochet fonctionnel (28) sont disposés, décalés à angle droit autour de l'axe de pivotement (29).

11. Adaptateur selon l'une des revendications 1 à 10,
**caractérisé en ce que** le crochet fonctionnel (28) présente une extrémité d'appui (34), qui, dans la position repliée (S1) s'appuie à plat sur la partie arrière (35') d'une paroi (35) du boîtier (4).

12. Adaptateur selon l'une des revendications 1 à 11,
**caractérisé en ce que** le crochet fonctionnel (28) présente une butée tournante (36), qui, dans la position dépliée (S2), s'appuie à plat sur une partie avant (35") de la paroi (35) du boîtier (4).

13. Adaptateur selon l'une des revendications 1 à 12, **caractérisé en ce que** l'élément rotatif (6) peut être déplacé autour d'un axe de pivotement (10), qui s'étend perpendiculairement au plan de projection (E) du boîtier (4), que, pour amener le boîtier (4) dans la position de blocage, l'élément rotatif (6) agit sur des moyens de blocage (8, 15) de sorte que, dans une position de rotation de l'élément rotatif (6), un premier élément de blocage (8) appuie contre le rail de maintien (3), dans la direction perpendiculaire à l'axe de rotation (10), et qu'un deuxième élément de blocage (15) appuie contre le rail de maintien (3) dans la direction axiale de l'élément rotatif (6).

14. Adaptateur selon l'une des revendications 1 à 13, **caractérisé en ce que** les moyens de blocage (8, 15) comprennent un organe de conversion du mouvement de rotation (11), qui est relié, solidaire en rotation, à l'élément rotatif (6), et qui, d'une part, présente un raccord de mouvement transversal, qui agit sur le premier élément de blocage (8) et, d'autre part, un raccord de mouvement axial (17), qui agit sur le deuxième élément de blocage (15).

15. Adaptateur selon l'une des revendications 1 à 14, **caractérisé en ce que** le raccord de mouvement transversal est réalisé sous la forme d'une surface d'excentrique de l'excentrique (11), qui s'étend dans la direction périphérique.
